# EUROPÄISCHE PATENTANMELDUNG

(11) **EP 2 987 436 A1**
(43) Veröffentlichungstag der Anmeldung: **24.02.2016**
(21) Anmeldenummer: 15181231.0
(22) Anmeldetag: 17.08.2015
(51) Int. Cl.: A47J 31/44

(54) **MILCHSCHAUMDÜSE**

(30) Priorität: 20.08.2014 DE 102014216498
(71) Anmelder: BSH Hausgeräte GmbH, 81739 München (DE)
(72) Erfinder: Hauser, Andreas, 83352 Altenmarkt (DE); Nöth, Christoph, 84558 Tyrlaching (DE)

(57) **Zusammenfassung**

Die vorliegende Erfindung betrifft eine Milchschaumdüse (1) mit einem Milchansaugkanal (8) mit einer Milchansaugöffnung (9) und einem Milchschaumausgabekanal (10) mit einer Austrittsöffnung (11) für Milchschaum (4). Erfindungswesentlich ist dabei, dass der Milchansaugkanal (8) und der Milchschaumausgabekanal (9) bei in einem Milchschäumer (12) montierter Milchschaumdüse (1) im Wesentlichen vertikal verlaufen und durch eine Trennwand (13) getrennt sind, wobei die Austrittsöffnung (11) für Milchschaum (4) des Milchschaumausgabekanals (10) nach unten gerichtet ist, und wobei die Trennwand (13) weiter nach unten ragt als die Milchansaugöffnung (9) und die Austrittsöffnung (11).

Hierdurch sind das Herstellen von hochqualitativem Milchschaum (4) und eine gleichmäßige Erwärmung der Milch in einem Glas (2) möglich.

## Beschreibung

Die vorliegende Erfindung betrifft eine Milchschaumdüse mit einem Milchansaugkanal mit einer Milchansaugöffnung und einem Milchschaumausgabekanal mit einer Austrittsöffnung für Milchschaum gemäß dem Oberbegriff des Anspruchs 1. Die Erfindung betrifft außerdem einen Milchschäumer mit einer derartigen Milchschaumdüse sowie einen Kaffeeautomaten mit einem solchen Milchschäumer.

Aus der DE 10 2009 002 234 A1 ist eine gattungsgemäße Milchschaumdüse, insbesondere als Teil eines Kaffeeautomaten bekannt, mit einem Dampfrohr, an dessen unterem Endabschnitt eine Dampfdüse angeordnet ist. Die Milchschaumdüse umfasst ferner einen Milchschäumer mit einer Unterdruck- und einer Emulgierkammer, einer Ansaugöffnung für Milch, zumindest die einem Kanal für Luft, Milch und Milchschaum und einen das Dampfrohr und den Schäumer umschließenden Hülse mit einer Ansaugöffnung für Luft und einer Austrittsöffnung für Milchschaum. Der zumindest eine Kanal für Milchschaum verläuft ausgehend von der Emulgierkammer nach oben in Richtung der Unterdruckkammer und zusätzlich ist die Austrittsöffnung für Milchschaum oberhalb der Ansaugöffnung für Milch angeordnet. Hierdurch sollen die Menge, die Temperatur und die Qualität des von der Milchschaumdüse produzierten Milchschaums erhöht werden können.

Soll beispielsweise Milch in einer Tasse oder einem Glas aufgeschäumt werden, so wird üblicherweise eine Milchschaumdüse eines Milchschäumers in die Milch eingetaucht und der Milchschäumprozess eingeleitet. Da die Milchschaumdüse üblicherweise jedoch nicht bis zum Boden der Tasse bzw. des Glases reicht bzw. abgesenkt wird, entsteht eine Grenze zwischen kalter und heißer Milch, so dass zwar Milchschaum oben aufgesetzt und die Milch im oberen Bereich auch erwärmt werden kann, die Milch jedoch unterhalb der zuvor genannten Grenze kalt bleibt.

Die vorliegende Erfindung beschäftigt sich daher mit dem Problem, für eine Milchschaumdüse der gattungsgemäßen Art eine verbesserte oder zumindest eine alternative Ausführungsform anzugeben, mit welcher insbesondere beim Herstellen von Milchschaum in einer Tasse oder einem Glas zusätzlich auch die gesamte Milch erwärmt werden kann. Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, bei einer Milchschaumdüse einen parallel zu einem Milchansaugkanal verlaufenden Milchschaumausgabekanal vorzusehen, die beide bei in einem Milchschäumer montierter Milchschaumdüse im Wesentlichen vertikal verlaufen und durch eine Trennwand getrennt sind. Der Milchschaumausgabekanal weist dabei eine nach unten gerichtete Austrittsöffnung für Milchschaum auf und ermöglicht damit beim Aufschäumen von Milch eine Durchwirbelung der gesamten im Glas bzw. in der Tasse vorhandenen Milch. Zwischen dem Milchschaumausgabekanal und dem Milchansaugkanal ist dabei eine Trennwand vorgesehen, welche weiter nach unten ragt als die Austrittsöffnung des Milchschaumausgabekanals und eine Milchansaugöffnung des Milchansaugkanals. Hierdurch kann zum einen zuverlässig verhindert werden, dass gerade erst vom Milchschaumausgabekanal ausgestoßener Milchschaum erneut in den Milchansaugkanal angesaugt wird und dadurch nur eine bedingte Erwärmung der Milch erfolgt. Zum anderen kann selbst bei einem Aufsetzen der Milchschaumdüse auf dem Boden der Tasse bzw. des Glases stets gewährleistet werden, dass sowohl die Milchansaugöffnung als auch die Austrittsöffnung für Milchschaum offen bleiben. Durch den nach unten ausgestoßenen Milchschaum wird somit die Milch im Glas bzw. in der Tasse durchwirbelt und es entsteht auf diese Weise eine gleichmäßige Erwärmung. Auch für den erzeugten Milchschaum ist dies vorteilhaft, da die Verwirbelung einen feinporigen Schaum bildet und größere Blasen unmittelbar zerstört werden. Von besonderem Vorteil bei der erfindungsgemäßen Milchschaumdüse ist jedoch, dass diese selbst bei einem geringen Eintauchen in die Milch, d.h. also bei einem Eintauchen nicht bis zum Boden des Glases bzw. der Tasse, für eine gleichmäßige Durchmischung und damit Erwärmung der in der Tasse bzw. im Glas befindlichen Milch sorgt und zudem Milchschaum von höchster Qualität herstellen kann.

Bei einer vorteilhaften Weiterbildung der erfindungsgemäßen Lösung befinden sich die Milchansaugöffnung und die Austrittsöffnung für Milchschaum auf gleicher Höhe. Durch die dazwischen angeordnete Trennwand und die nach unten gerichtete Austrittsöffnung am Milchschaumausgabekanal wird dabei stets gewährleistet, dass zum einen qualitativ hochwertiger und feinporiger Schaum erzeugt wird und zum anderen eine vollständige Durchmischung und damit eine gleichmäßige Erwärmung der im Glas befindlichen Milch erfolgt.

Zweckmäßig ist die Trennwand im unteren Bereich abgewinkelt. Durch die abgewinkelte Ausführungsform der Trennwand im unteren Bereich kann beispielsweise eine Ansaugrichtung zum Ansaugen der Milch vorgegeben werden, wogegen die nach unten offene und nach unten gerichtete Austrittsöffnung weiterhin für eine gleichmäßige Durchmischung der Milch und dadurch für eine gleichmäßige Erwärmung derselben sorgt.

Bei einer weiteren vorteilhaften Ausführungsform der erfindungsgemäßen Lösung bildet die Milchschaumdüse zugleich einen Teil einer Unterdruckkammer und weist eine Rastkontur zur Verbindung mit einem Milchschäumer auf. Durch die Rastkontur lässt sich die erfindungsgemäße Milchschaumdüse vergleichsweise einfach mit dem Milchschäumer verbinden und zudem vergleichsweise einfach von diesem demontieren, wodurch eine einfache und gründliche Reinigung möglich ist.

Zweckmäßig ist die Milchschaumdüse als Kunststoffspritzgussteil ausgebildet. Die Ausbildung der Milchschaumdüse als Kunststoffspritzgussteil ermöglicht eine einerseits qualitativ hochwertige und andererseits kostengünstige Ausführungsform, wobei die Herstellung mit modernen Kunststoffspritzgussverfahren weder Beschränkungen hinsichtlich der Farbe noch anderer Eigenschaften bedingt.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine Milchschaumdüse gemäß dem Stand der Technik bei Anwendung in einem Milchglas,
- Fig. 2: eine Darstellung wie in Fig. 1, jedoch bei einer erfindungsgemäßen Milchschaumdüse,
- Fig. 3: eine Schnittdarstellung durch eine mögliche Ausführungsform der erfindungsgemäßen Milchschaumdüse,
- Fig. 4: eine Darstellung wie in Fig. 3, jedoch bei anders ausgebildeter Trennwand.

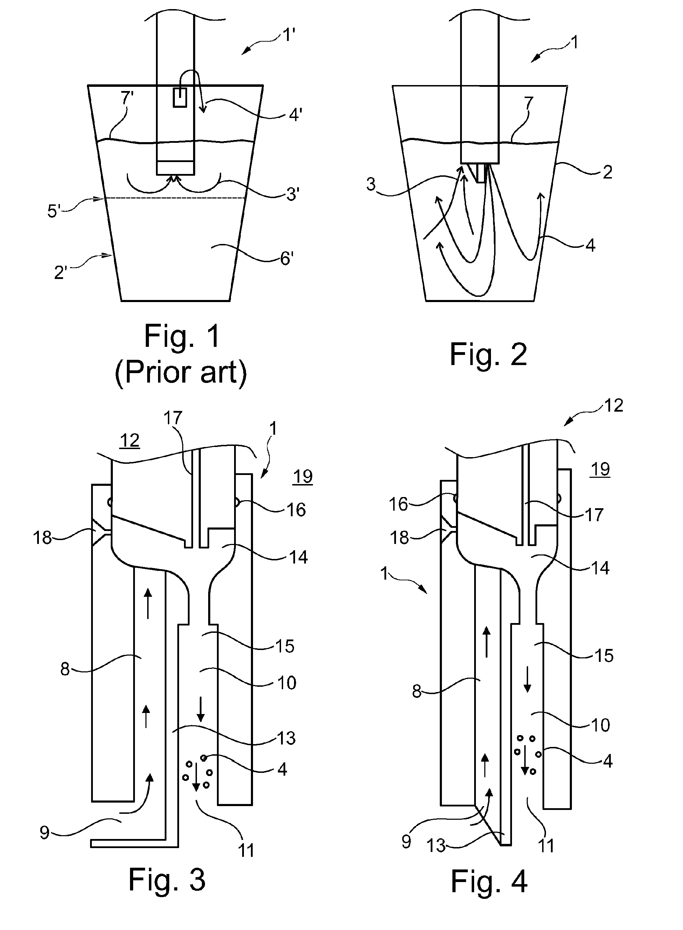

Entsprechend der Fig. 1 ist eine Milchschaumdüse 1' gemäß dem Stand der Technik (Prior Art) bei der Herstellung von Milchschaum 4' in einem Glas 2' gezeigt. Deutlich zu erkennen ist hierbei, dass die Milchschaumdüse 1' lediglich in einen oberen Bereich 3' eintaucht und von dort Milch zur Erzeugung des Milchschaums 4' ansaugt. Hierbei entsteht jedoch eine Temperaturgrenze 5', unterhalb welcher ein Bereich 6' mit kalter Milch verbleibt, wogegen der oberhalb der Temperaturgrenze 5' liegende Bereich 3' durch den oberhalb des Milchspiegels 7' ausgestoßenen Milchschaum 4' zumindest teilweise erwärmt wird. Mit der Milchschaumdüse 1' gemäß dem Stand der Technik verbleibt jedoch im Bereich 6' stets kalte Milch, wodurch eine gleichmäßige Erwärmung nicht möglich ist.

Mit der gemäß den Figuren 3 und 4 dargestellten erfindungsgemäßen Milchschaumdüse 1 ist dies jedoch möglich, was an deren besonderer Ausbildung liegt. Die erfindungsgemäße Milchschaumdüse 1 besitzt dabei einen Milchansaugkanal 8 mit einer Milchansaugöffnung 9 sowie einen parallel dazu verlaufenden Milchschaumausgabekanal 10 mit einer nach unten gerichteten Austrittsöffnung 11 für Milchschaum 4. Der Milchansaugkanal 8 und der Milchschaumausgabekanal 10 verlaufen dabei bei in einem Milchschäumer 12 montierter Milchschaumdüse 1 im Wesentlichen vertikal und sind durch eine Trennwand 13 getrennt. Diese Trennwand 13 ragt bei der erfindungsgemäßen Milchschaumdüse 1 gemäß den Figuren 2 bis 4 weiter nach unten als die Milchansaugöffnung 9 und die Austrittsöffnung 11 für Milchschaum 4. Durch die nach unten gerichtete Austrittsöffnung 11 kann beim Betrieb der erfindungsgemäßen Milchschaumdüse 1 erreicht werden, dass der hierüber ausgestoßene Milchschaum 4 die gesamte Milch im Glas 2 durchwirbelt, wie dies auch gemäß der Fig. 2 dargestellt ist. Hierdurch erfolgt somit eine gleichmäßige Erwärmung der Milch, ohne dass ein Bereich 6' mit kalter Milch verbleibt, wie dies bei der Milchschaumdüse 1' gemäß dem Stand der Technik der Fall ist. Dies funktioniert sogar dann, wenn die Milchschaumdüse 1 nicht bis zum Boden des Glases 2 geschoben, sondern lediglich teilweise in die Milch eingetaucht werden muss. Auch für den erzeugten Milchschaum 4 ist dies vorteilhaft, da die Verwirbelung einen sehr feinporigen Schaum bildet und große Blasen sofort zerstört werden. Weitere Vorteile zeigen sich im Gerätedesign, da eine geringere Höhenverstellung der Milchschaumdüse 1 erforderlich ist.

Betrachtet man die Milchschaumdüse 1 gemäß der Fig. 2, so kann man erkennen, dass dort die Milchansaugöffnung 9 und die Austrittsöffnung 11 auf gleicher Höhe sind, wobei selbstverständlich auch die Milchansaugöffnung 9, wie dies gemäß der Fig. 3 dargestellt ist, tiefer liegen kann als die Austrittsöffnung 11. Des Weiteren ist denkbar, dass die Trennwand 13 gerade ist, wie dies gemäß den Figuren 2 und 4 dargestellt ist, oder aber im unteren Bereich abgewinkelt, wie dies gemäß der Fig. 3 dargestellt ist. Hierdurch ist insbesondere eine speziell gerichtete Ansaugung von Milch möglich.

Betrachtet man den genauen Aufbau der erfindungsgemäßen Milchschaumdüse 1 gemäß den Figuren 3 und 4, so kann man erkennen, dass diese zugleich einen Teil einer Unterdruckkammer 14 bildet, ebenso wie eine Emulgierkammer 15. Darüber hinaus weist die erfindungsgemäße Milchschaumdüse 1 eine Rastkontur 16 zur Verbindung mit dem Milchschäumer 12 auf. Am Milchschäumer 12 ist dabei eine Gegenrastkontur vorgesehen. Im Milchschäumer 12 ist in üblicher Weise eine Dampfzuleitung 17 vorgesehen, während in der Milchschaumdüse 1 zusätzlich noch eine Lufteintrittsöffnung 18 vorgesehen ist, über welche die Unterdruckkammer 4 Luft ansaugen kann.

Generell kann mit einem derartigen Milchschäumer 12 bzw. einer solchen Milchschaumdüse 1 auch ein Kaffeeautomat 19 ausgestattet sein und dadurch zum Herstellen von Milchschaum 4 herangezogen werden.

Mit der erfindungsgemäßen Milchschaumdüse 1 bzw. dem erfindungsgemäßen Milchschäumer 12 lässt sich somit auch bei lediglich geringem Eintauchen der Milchschaumdüse 1 in die aufzuschäumende Milch eine gleichmäßige Erwärmung derselben sowie ein besonders feinporiger Schaum herstellen. Darüber hinaus ergeben sich Vorteile hinsichtlich des Gerätedesigns, da beispielsweise die Höhenverstellung der Milchschaumdüse 1 geringer gehalten werden kann.

### Bezugszeichenliste

- 1: Milchschaumdüse
- 2: Glas
- 3: Bereich
- 4: Milchschaum
- 5: Temperaturgrenze
- 6: Bereich
- 7: Milchspiegel
- 8: Milchansaugkanal
- 9: Milchansaugöffnung
- 10: Milchschaumausgabekanal
- 11: Austrittsöffnung für Milchschaum
- 12: Milchschäumer
- 13: Trennwand
- 14: Unterdruckkammer
- 15: Emulgierkammer
- 16: Rastkontur
- 17: Dampfzuleitung
- 18: Lufteintrittsöffnung
- 19: Kaffeeautomat

## Patentansprüche

1. Milchschaumdüse (1) mit einem Milchansaugkanal (8) mit einer Milchansaugöffnung (9) und einem Milchschaumausgabekanal (10) mit einer Austrittsöffnung (11) für Milchschaum (4), **dadurch gekennzeichnet, dass** der Milchansaugkanal (8) und der Milchschaumausgabekanal (9) bei in einem Milchschäumer (12) montierter Milchschaumdüse (1) im Wesentlichen vertikal verlaufen und durch eine Trennwand (13) getrennt sind, wobei die Austrittsöffnung (11) für Milchschaum (4) des Milchschaumausgabekanals (10) nach unten gerichtet ist, und wobei die Trennwand (13) weiter nach unten ragt als die Milchansaugöffnung (9) und/oder die Austrittsöffnung (11).

2. Milchschaumdüse nach Anspruch 1, **dadurch gekennzeichnet, dass** sich die Milchansaugöffnung (9) und die Austrittsöffnung (11) auf gleicher Höhe befinden.

3. Milchschaumdüse nach Anspruch 1 oder 2, **dadurch gekennzeichnet, dass** die Trennwand (13) im unteren Bereich abgewinkelt ist.

4. Milchschaumdüse nach einem der Ansprüche 1 bis 3, **dadurch gekennzeichnet, dass** die Milchaumdüse (1) zugleich einen Teil einer Unterdruckkammer (14) bildet und eine Rastkontur (16) zur Verbindung mit dem Milchschäumer (12) aufweist.

5. Milchschaumdüse Anspruch 4, **dadurch gekennzeichnet, dass** die Milchaumdüse (1) als Kunststoffspritzgussteil ausgebildet ist.

6. Milchschäumer (12) mit einer Milchschaumdüse (1) nach einem der Ansprüche 1 bis 5.

7. Kaffeeautomat (19) mit einem Milchschäumer (12) nach Anspruch 6.
